Europäisches Patentamt

European Patent Office

Office européen des brevets

(11) Veröffentlichungsnummer: **0 180 684**
**A2**

(12) # EUROPÄISCHE PATENTANMELDUNG

(21) Anmeldenummer: 84730153.8

(22) Anmeldetag: 27.12.84

(51) Int. Cl.⁴: **H 04 M 1/00**
**H 04 M 11/06**

(30) Priorität: 02.11.84 DE 8432500 U

(43) Veröffentlichungstag der Anmeldung:
14.05.86 Patentblatt 86/20

(84) Benannte Vertragsstaaten:
AT BE CH DE FR GB IT LI LU NL SE

(71) Anmelder: Coscom Datentechnik GmbH & Co.
Computer KG
Tauentzienstrasse 1
D-1000 Berlin 30(DE)

(72) Erfinder: Behnk, Bernd Dieter
Wickramstrasse 41A
D-1000 Berlin 30(DE)

(74) Vertreter: Butenschön, Antje, Dr. et al,
Patentanwälte PFENNING, MEINIG & PARTNER
Kurfürstendamm 170
D-1000 Berlin 15(DE)

(54) Akustikkoppler zum Übertragen von Daten.

(57) Es wird ein Akustikkoppler zum Übertragen von Daten von einem und an einen mit ihm verbindenen Rechner über ein Telefon vorgeschlagen. Der Akustikkoppler weist ein auf den Lautsprecher- und den Mikrofonbereich des Telefonhörers aufsetzbares Sende- und Empfangsteil (2,3) und ein das Sende- und Empfangsteil verbindendes flexibles Zwischenteil (8) auf, wobei Sende- und Empfangsteil mit den Hörer aufnehmenden Vertiefungen (9) und jeweils ein elastisches, die Vertiefungen teilweise abdeckendes Anpaßelement (11) tragen. Die Vertiefungen (9) und Anpaßelemente (11) haben eine im wesentlichen quadratische Form mit abgerundeten Enden, wobei in jedem Anpaßelement eine Öffnung mit entsprechender Form vorgesehen ist.

Fig. 1

EP 0 180 684 A2

## Akustikkoppler zum Übertragen von Daten

Die Neuerung betrifft einen Akustikkoppler zum Übertragen von Daten von einem und an einen mit ihm verbundenen Rechner über ein Fernsprechapparat nach dem Oberbegriff des Hauptanspruchs.

Es ist bekannt, Akustikkoppler zum Ankoppeln an Fernsprechapparate zu verwenden, die zur Übertragung von Daten an einen und von einem mit dem Akustikkoppler verbundenen Rechner dienen. Dabei sind ein Sende- und Empfangsteil vorgesehen, die mit dem jeweiligen Empfangs- und Sendeteil des Telefonhörers zusammenarbeiten. Der Telefonhörer wird dabei in Vertiefungen in Sende- und Empfangsteil eingesetzt, wobei ein eine runde Form aufweisendes elastisches Anpaßelement die Nebengeräusche abschirmen soll.

Es hat sich aber gezeigt, daß der Telefonhörer immer wieder mit seinem Lautsprecher und/oder Mikrofonteil aus den Vertiefungen herausrutscht,
so daß unerwünschte Fremdgeräusche mitübertragen
werden.

Der Neuerung liegt daher die Aufgabe zugrunde,
einen Akustikkoppler zu schaffen, der eine
einwandfreie akustische Kopplung mit Telefonhörern aller Bauarten bei zuverlässiger Abdichtung
gegen Fremdgeräusche gewährleistet und somit
die Voraussetzungen für eine gute Übertragung
zur Verfügung stellt.

Diese Aufgabe wird neuerungsgemäß durch die
kennzeichnenden Merkmale des Hauptanspruchs
in Verbindung mit den Merkmalen des Oberbegriffs
gelöst.

Durch die besondere Ausbildung des Sende- und
Empfangsteils und der dazugehörigen Anpaßelemente
ist die akustische Kopplung sowohl mit runden
als auch mit flachen, eine in etwa viereckige
Form aufweisenden Lautsprecher- und Mikrofonteilen der Telefonhörer und auch mit solchen
anderer Bauarten bei guter Qualität möglich.

Die abgeflachten Seitenflächen des Akustikkopplers
bieten einen sicheren Stand der gesamten mit
dem Hörer verbundenen Anordnung, wodurch die
Übertragungsqualität verbessert wird, da sich
das Kohlegranulat in der Seitenlage nicht im
Hörer festsetzt.

Dadurch, daß zwischen dem membranartigen, die
Vertiefungen teilweise überdeckenden Mittelteil
des Anpaßelementes und dem zur Befestigung
dienenden Randteil ein Absatz vorhanden ist und das Randteil gegenüber dem membranartigen Teil verstärkt ist, weist das letztere eine große Flexibilität auf, wodurch es sich besser an das jeweilige Teil des Hörers anpassen kann, wobei aber durch das verstärkte Randteil eine ausreichende Festigkeit gegeben ist. Das das Sende- und Empfangsteil verbindende flexible Zwischenteil ist ziehharmonikaförmig ausgebildet, wodurch es sich in einfacher Weise an den Abstand zwischen dem Lautsprecher- und Mikrofonteil des jeweiligen anzukoppelnden Telefonhörers anpassen läßt.

Die Neuerung ist in der Zeichnung dargestellt und wird in der nachfolgenden Beschreibung näher erläutert. Es zeigen:

Fig. 1 eine Aufsicht auf den Akustikkoppler; und

Fig. 2 die Ansicht auf eine Stirnfläche.

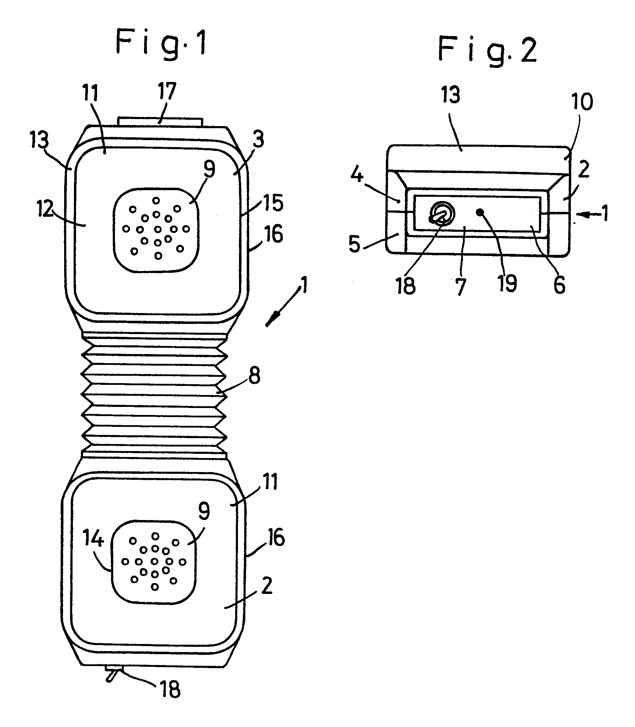

Der Akustikkoppler entsprechend den Fig. 1 und 2 weist ein Sendeteil 2 und ein Empfangsteil 3 auf. Die Gehäuse beider Teile sind identisch und sind als zusammensteckbare Kunststoffhälften 4, 5 ausgebildet, die die elektronische Schaltung mit Mikrofon bzw. Lautsprecher für die Sende- und Empfangsteile 2, 3 aufnehmen. In den Stirnflächen sind Aussparungen 6 vorgesehen, die durch ein in eine umlaufende Nut einsteckbares Plättchen 7 abgedeckt werden können. Die Sende- und Empfangsteile 2, 3 sind durch ein Zwischenteil 8 verbunden, das aus einem flexiblen Werkstoff, beispielsweise Gummi oder Kunststoff, besteht und ziehharmonikaförmig ausgebildet sind.

0180684

Die Enden dieses Zwischenteils sind mit einem umlaufenden Steg versehen, der jeweils in die umlaufende Nut der zueinander zugewandten Stirnflächen der Sende- und Empfangsteile 2, 3 eingesteckt wird, so daß sich eine formschlüssige Verbindung zwischen Zwischenteil 8 und Sende- und Empfangsteile 2, 3 ergibt. Die Länge des Zwischenteiles 8 ist so gewählt, daß im entspannten Zustand der Telefonhörer mit seinem Mikrofon- und Lautsprecherteil in das Sende- und Empfangsteil 2, 3 paßt.

Die Sende- und Empfangsteile 2, 3 weisen jeweils eine Vertiefung 9 auf, die durch einen an der Oberseite vorgesehenen umlaufenden Rand 10 weiter vertieft wird. Jede Vertiefung 9 ist teilweise mit einem elastischen Anpaßelement 11, vorzugsweise aus Gummi, abgedeckt, das ein membranartiges mittleres Teil 12 und ein Randteil 13 aufweist. Das membranartige mittlere Teil 12 ist mit einer Öffnung 14 versehen, die kleiner ist als das Mikrofon- oder Lautsprecherteil eines Telefonhörers. Das Randteil 13 des Anpaßelementes ist senkrecht zum membranartigen Teil 12 abgewinkelt und weist eine umlaufende Nut (nicht dargestellt) auf, die auf den umlaufenden Rand 10 aufgesteckt und mit diesem durch Klebung oder dergleichen verbunden wird. Zwischen Randteil 13 und membranartigen Teil 12 ist ein Absatz 15 vorgesehen, durch den das elastische membranartige Teil eine größere Eigenflexibilität erhält. Die Vertiefung 9, die Kontur des Anpaßelementes 11 und die Öffnung 14 des membranartigen Teils 12 sind viereckig mit abgerundeten Ecken ausgebildet.

0180684

Die Seitenflächen 16 der Sende- und Empfangsteile 2, 3 sind abgeflacht, so daß der Akustikkoppler in stabiler Weise in die Seitenlage gestellt werden kann. In dem Plättchen 7 der einen Stirnfläche der Sende- und Empfangsteile 2, 3 ist eine Steckerleiste 17 zum Anschluß an die nicht dargestellten Rechner befestigt, während in dem Plättchen 7 der entgegengesetzten Stirnfläche ein Schalter 18 zum Umschalten vom Sende- in den Empfangsbetrieb und eine Kontrollampe 19 vorgesehen sind.

Für den Übertragungsbetrieb wird der Telefon- hörer mit seinem Mikrofon- und Lautsprecherteil in die entsprechenden Vertiefungen 9 eingedrückt, wobei die elastische Membran sich eindrückt und dicht um die Mikrofon- bzw. Lautsprecherteile legt. Durch die be- sondere Ausbildung der Öffnungen 14 und der Vertiefungen 9 ist der dichte Abschluß gegen Umweltgeräusche sowohl bei runden als auch bei eckigen Hörern gegeben. Durch das flexible Zwischenteil 8 kann sich der Akustikkoppler insgesamt an die Form des Telefonhörers anpassen. Für die Übertragung wird der Akustikkoppler mit dem Telefonhörer in die stabile, durch die abgeflachten Seitenflächen 16 vorgegebene Seitenlage gelegt.

Schutzansprüche

1. Akustikkoppler zum Übertragen von Daten von einem und an einen mit ihm verbundenen Rechner über ein Telefon mit jeweils einem auf den Lautsprecher- und den Telefonbereich des Telefonhörers aufsetzbares Sende- und Empfangsteil und einem das Sende- und Empfangsteil verbindendes flexibles Zwischenteil, wobei Sende- und Empfangsteil mit den Hörer aufnehmenden Vertiefungen versehen sind und jeweils ein elastisches, die Vertiefung teilweise abdeckendes Anpaßelement tragen, d a d u r c h   g e k e n n z e i c h n e t , daß die Vertiefungen (9) und Anpaßelemente (11) eine im wesentlichen quadratische Form mit abgerundeten Ecken aufweisen, wobei die Öffnung (14) des Anpaßelementes (11) mit einer entsprechenden Form versehen sind.

2. Akustikkoppler nach Anspruch 1, dadurch gekennzeichnet, daß die Seitenflächen (16) des Sende- und Empfangsteils (2,3) abgeflacht sind.

3. Akustikkoppler nach Anspruch 1 oder 2, dadurch gekennzeichnet, daß das Anpaßelement ein die Öffnung aufweisendes membranartiges Teil (12) und ein stegartiges, mit einem umlaufenden Schlitz versehenes Randteil (13) aufweist, die ineinander übergehen, wobei an der Übergangsstelle zwischen Randteil (13) und membramartigem Teil (12) ein Absatz (15) vorgesehen ist.

4. Akustikkoppler nach einem der Ansprüche 1 bis 3, dadurch gekennzeichnet, daß das Zwischenteil (8) aus Kunststoff oder Gummi besteht und ziehharmonikaförmig ausgebildet ist.

5. Akustikkoppler nach einem der Ansprüche 1 bis 4, dadurch gekennzeichnet, daß in einer der Stirnfläche der Sende- und Empfangsteile (2,3) eine Steckleiste (17) zum Anschluß an den Rechner und in einer anderen Stirnfläche ein Schalter (18) zum Umschalten von Senden auf Empfangen und eine Kontrollampe (19) angeordnet sind.

# Fig·1

11  17

13  3

9

12  15

16

1

8

11

9

16

14

2

18

# Fig.2

13  10

4  2

5  1

18  7  19  6